Europäisches Patentamt

European Patent Office

Office européen des brevets

(11) Veröffentlichungsnummer: **0 566 844 B1**

# EUROPÄISCHE PATENTSCHRIFT

(45) Veröffentlichungstag der Patentschrift: **02.11.95**

(51) Int. Cl.6: **B23K 11/25**

(21) Anmeldenummer: **93103439.1**

(22) Anmeldetag: **04.03.93**

(54) **Verfahren zur Spannungsmessung über der Schweissnaht bei einer Rollenkopfschweissmaschine und Vorrichtung zu dessen Durchführung.**

(30) Priorität: **24.04.92 CH 1330/92**

(43) Veröffentlichungstag der Anmeldung:
**27.10.93 Patentblatt  93/43**

(45) Bekanntmachung des Hinweises auf die
Patenterteilung:
**02.11.95 Patentblatt  95/44**

(84) Benannte Vertragsstaaten:
**CH DE DK ES FR GB IT LI**

(56) Entgegenhaltungen:
**EP-A- 0 014 271
EP-A- 0 465 038
US-A- 4 714 816**

(73) Patentinhaber: **ELPATRONIC AG
Hertizentrum 6
CH-6303 Zug (CH)**

(72) Erfinder: **Levy, Gideon, Dr.
Via Vignole 33
CH-6644 Orselina (CH)**
Erfinder: **Baessler, Peter, Dr.
Dorfstrasse 28
CH-5454 Bellikon (CH)**
Erfinder: **Lachmuth, Theodor
Im Stüdacker 17
CH-8902 Urdorf (CH)**

## Beschreibung

Die Erfindung betrifft ein Verfahren gemäss Oberbegriff des Anspruchs 1. Ferner betrifft die Erfindung eine Vorrichtung zur Durchführung des Verfahrens.

Es ist bekannt, die Güte von elektrischen Schweissungen zu überwachen, wozu auf die EP-A-0 373 422 verwiesen werden kann. Eine solche Einrichtung benötigt zur Ueberwachung der Energieeinbringung in die Schweissnaht insbesondere die Messung der Spannung über der Schweissnaht.

Die Spannungsmessung erfolgt bekannterweise (DE-PS 38 22 908) an der Rollenkopf-Halterung oder am Rollenkopf. Dies bedingt eine aufwendige Kompensation der mitgemessenen parasitären Widerstände, welche sich aus der Rollenkopfverschmutzung, den Lagern und den Schweissstromübertragungsmitteln auf die Rollenköpfe ergeben.

Gemäss der EP-A-0 465 038 ist es bekannt zur Spannungsmessung über der Schweissnaht die Spannung einerseits an der oberen Drahtelektrode und andererseits an dem die untere Schweissrolle tragenden Schweissarm abzugreifen. Der Abgriff direkt an der Drahtelektrode vermeidet dort die unerwünschte Erfassung von Störspannungen.

Der Erfindung liegt einerseits die Aufgabe zugrunde, die Spannungsmessung noch genauer und einfacher durchzuführen und ferner die Funktionstüchtigkeit des jeweiligen Rollenkopfes zu ermitteln, was mit den bekannten Verfahren nicht möglich ist.

Diese Aufgabe wird beim Verfahren der eingangs genannten Art durch die kennzeichnenden Merkmale des Anspruchs 1 gelöst.

Als Vorteile der Spannungsmessung an den beiden Drahtelektroden ergibt sich eine höhere Messgenauigkeit für die Messung der Energieeinbringung in die Schweissnaht und insbesondere keine Drift des Messignals. Damit entfällt die Notwendigkeit, die den Spannungsmesswert verarbeitende Ueberwachungseinrichtung nachzukalibrieren. Daraus ergeben sich schlussendlich weniger Fehlauswürfe von Schweissprodukten durch die Ueberwachungseinrichtung infolge fehlerhafter Energiemessung.

Weiterhin erfolgt auch eine Spannungsmessung am Rollenkopf bzw. an der Rollenkopfhalterung. Ermittelt wird nun aber die Spannung zwischen Rollenkopf und Drahtelektrode bzw. zwischen Rollenkopf-Halterung und Drahtelektrode als zusätzlicher Spannungsmesswert. Durch Messung jeweils dieser Spannung kann die Funktionstüchtigkeit des jeweiligen Rollenkopfes ermittelt werden, was die entsprechende Anpassung der Wartungsintervalle für die Rollenköpfe ermöglicht. Unnötige Produktionsunterbrüche können so vermieden werden. Der frühzeitige Verschleiss oder die Verschmutzung können erkannt werden, ehe die Schweissqualität negativ beeinflusst wird.

Der Erfindung liegt weiter die Aufgabe zugrunde, eine Messvorrichtung zur Durchführung des Verfahrens zu schaffen. Diese ist gemäss Anspruch 2 definiert.

Im folgenden werden der Stand der Technik und die Erfindung anhand der Zeichnungen näher erläutert. Dabei zeigt

Figur 1 schematisch die Spannungsmessung an den Rollenköpfen gemäss Stand der Technik; und

Figur 2 die Messung gemäss der Erfindung.

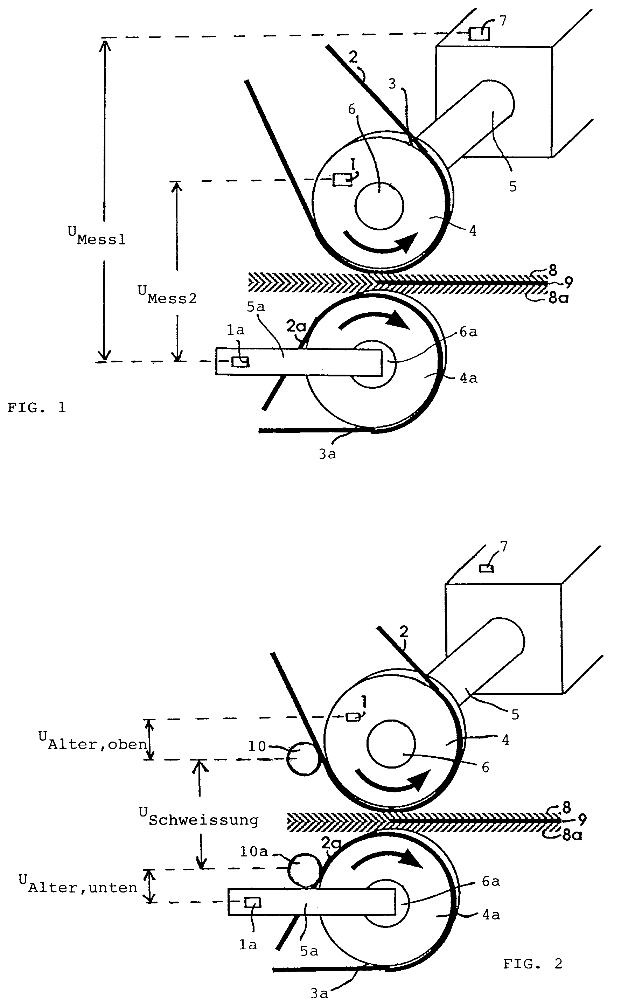

Gängige Lösungen der Energiemessung greifen die Spannung an den Schweissstromzuleitungen oder am rotierenden Teil des Rollenkopfes ab. In der Figur 1 ist gezeigt, wie durch die gängigen Messverfahren die Spannungsmessung durch Störspannungen verfälscht wird.

Die gemessenen Spannung $U_{Mess1}$ ist die Summe der Spannungsabfälle der stromdurchflossenen Komponenten im Messkreis:

$$U_{Mess1} = U_{Stör,oben} + U_{Schweissung} + U_{Stör,unten}$$
$$U_{Stör,oben} = (R_5 + R_6 + R_4 + R_3 + R_2) \cdot I$$
$$U_{Schweissung} = (R_8 + R_9 + R_{8a}) \cdot I$$
$$U_{Stör,unten} = (R_{5a} + R_{6a} + R_{4a} + R_{3a} + R_{2a}) \cdot I$$

wobei in diesem Fall der obere Spannungsabgriff an der oberen Rollenkopf-Halterung 7 erfolgt. Die genannten Widerstände R ergeben sich aus dem elektrischen Widerstand der oberen Rollenkopf-Lagerung 5 ($R_5$), dem oberen Uebergang 6 ($R_6$) von der Lagerung 5 zum Rollenkopf 4, dem Rollenkopf 4 selber ($R_4$), von dem Uebergang 3 ($R_3$) des oberen Rollenkopfes 4 auf die obere Drahtelektrode 2 und dem Uebergang vom Draht 2 auf das obere Blech 8 ($R_2$). Ferner vom Widerstand des oberen Bleches 8 ($R_8$), der Schweissnaht 9 ($R_9$) und des unteren Bleches 8a ($R_{8a}$). Die unteren Widerstände $R_{5a}$, $R_{6a}$, $R_{4a}$, $R_{3a}$, $R_{2a}$ ergeben sich in analoger Weise; der Spannungsabgriff 1a erfolgt an der unteren Rollenkopf-Halterung 5a. I bezeichnet den Schweissstrom. Es zeigt sich, dass der Messgrösse $U_{Mess1}$, welche eigentlich die Spannung nur über der Schweissstelle angeben sollte, hohe Zusatzspannungen überlagert sind.

Bei einer anderen Ausführung gemäss Stand der Technik erfolgt der obere Spannungsabgriff 1 am oberen Rollenkopf 4. Durch diese Anordnung werden die der gemessenen Spannung $U_{Mess2}$ überlagerten Zusatzspannungen nur unwesentlich reduziert. Es gilt

$$U_{Stör,oben1} = (R_6 + R_4 + R_3 + R_2) \cdot I.$$

Besonders kritisch sind die Widerstände $R_3$ und $R_{3a}$, weil sie während des Produktionsprozesses kontinuierlich anwachsen und somit eine Drift des Spannungssignals bewirken. Da das Anwachsen dieser Widerstände bis zu einem bestimmten Wert keinen Einfluss auf die Qualität der Schweissung hat, bedeutet die Messung dieser zeitlich veränderlichen Zusatzspannung eine Verschlechterung der Messqualität und kann bei der die Schweissqualität mittels der Messung überwachenden Einrichtung die Auslösung von Fehlauswürfen (also den Auswurf an sich qualitativ korrekt geschweisster Stücke) bewirken.

Eine Verbesserung ergibt sich, wenn der obere Spannungsabgriff gemäss der EP-A-0 465 038 direkt an der Drahtelektrode erfolgt; das Problem bleibt aber für den unteren Spannungsabgriff bestehen, der gemäss diesem Dokument weiterhin am Schweissarm erfolgt.

Grundgedanke der vorliegenden Erfindung ist es daher einerseits, die für die Qualitätsbeurteilung der Schweissnaht störenden Zusatzspannungen - insbesondere die variablen Spannungsabfälle über den Widerständen $R_3$ und $R_{3a}$ - nicht mitzumessen.

In der Figur 2 ist das Prinzip der verbesserten Messanordnung dargestellt. Der Spannungsabgriff 10, 10a an den Schweissdrähten 2, 2a eliminiert weitgehend alle störenden Einflüsse der Zusatzspannungen.

Gleiche Bezugsziffern wie in der Figur 1 bezeichnen dabei in der Figur 2 die selben Elemente.

Andererseits werden die Spannungsabgriffe 1 (oder 7) bzw. 1a an den Rollenköpfen 4 bzw. an deren Halterungen 5, 5a weiterhin vorgesehen. Auf diese Weise können nun auch die Spannungen $U_{Alter,oben}$ und $U_{Alter,unten}$ zwischen den Spannungsabgriffen 10 und 1 bzw. 10a und 1a gemessen werden. Diese Spannungen ergeben ein Mass für die Funktionstüchtigkeit der Rollenköpfe, welche dadurch im Betrieb der Schweissmaschine überwacht werden können, was bis anhin nicht möglich war. Erfasst werden dabei insbesondere die Widerstände $R_3$, $R_{3a}$ bzw. deren Aenderung.

Es ergeben sich als Vorteile insbesondere weniger Produktionsstillstand durch dynamische Wartungsintervalle, weniger Rollenkopfverschleiss durch Vermeidung von präventiver Ueberarbeitung (Ueberdrehen) der Rollenköpfe, weniger Ausschuss durch zu spät erkannte Verschmutzung oder Beschädigung der Rollenköpfe und Unterstützung bei der Wartungsplanung der Schweissmaschine.

Die Messvorrichtung zur Durchführung des Verfahrens weist Schleifkontakte 10, 10a für die Drahtelektroden 2, 2a zur Bildung der Spannungsabgriffe auf. Diese Schleifkontakte können als feststehende oder gefederte Schleifkontakte ausgeführt sein. Die Messvorrichtung weist weitere Messkanäle auf, um die obengenannten Spannungen $U_{Alter,oben}$, $U_{Alter,unten}$ zur Bestimmung der Rollenkopffunktion ebenfalls messen zu können.

## Patentansprüche

1. Verfahren zur Messung von elektrischer Spannung bei einer Rollenkopfschweissmaschine oder Punktschweissmaschine mit Drahtelektroden (2,2a), wobei ein Spannungsabgriff (10) an einer der Drahtelektroden (2) vorgesehen ist, dadurch gekennzeichnet, dass zur Messung der elektrischen Spannung über der Schweissnaht auch an der zweiten Drahtelektrode (2a) ein Spannungsabgriff (10a) erfolgt, und dass ferner jeweils die elektrische Spannung am Rollenkopf (4,4a) oder der Rollenkopflagerung (5,5a) abgegriffen wird und die elektrische Spannung zwischen dem Rollenkopf (4,4a) oder der Rollenkopflagerung (5,5a) und der zugehörigen Drahtelektrode (2,2a) bestimmt wird.

2. Messvorrichtung zur Durchführung des Verfahrens nach Anspruch 1 zum Ermitteln von elektrischen Spannung bei einer Rollenkopfschweißmaschine oder Punktschweißmaschine mit Drahtelektroden (2,2a), wobei ein Spannungsabgriff (10) an einer der Drahtelektroden (2) vorgesehen ist, gekennzeichnet durch eine Messeinheit zur Messung elektrischer Spannung mit einem ersten Messkanal und zwei damit verbundenen Schleifkontakten (10,10a) zur Kontaktierung der oberen bzw. unteren Drahtelektrode (2,2a) und mit weiteren Messkanälen zur Messung jeweils der elektrischen Spannung ($U_{Alter, unten}$, $U_{Alter, oben}$) zwischen der Drahtelektrode (2,2a) und einem Spannungsabgriff (1,1a,7) am Rollenkopf (4,4a) oder der Rollenkopflagerung (5,5a).

3. Messvorrichtung nach Anspruch 2, dadurch gekennzeichnet, dass die Schleifkontakte (10,10a) als feststehende Kontakte ausgeführt sind.

4. Messvorrichtung nach Anspruch 2, dadurch gekennzeichnet, dass die Schleifkontakte (10,10a) als gefederte Kontakte ausgeführt sind.

5. Messvorrichtung nach Anspruch 2, dadurch gekennzeichnet, dass für die eine Drahtelektrode ein feststehender Schleifkontakt und für die andere Drahtelektrode ein gefederter Schleifkontakt vorgesehen ist.

**Claims**

1. Method of measuring voltage at an electrode-wheel-head welding machine or spot-welding machine having wire electrodes (2, 2a), a voltage tap (10) being provided at one of the wire electrodes (2), characterized in that a voltage tap (10a) is also effected at the second wire electrode (2a) to measure the voltage across the weld seam, and in that furthermore in each case the voltage is tapped at the electrode wheel head (4, 4a) or the electrode-wheel-head bearing arrangement (5, 5a), and the voltage between the electrode wheel head (4, 4a) or the electrode-wheel-head bearing arrangement (5, 5a) and the associated wire electrode (2, 2a) is determined.

2. Measuring apparatus for carrying out the method according to Claim 1 for determining voltage at an electrode-wheel-head welding machine or spot-welding machine having wire electrodes (2, 2a), a voltage tap (10) being provided at one of the wire electrodes (2), characterized by a measuring unit for measuring voltage having a first measuring channel and two sliding contacts (10, 10a) connected thereto for electrically bonding the top and bottom wire electrode (2, 2a) and having further measuring channels for measuring in each case the voltage ($U_{old, bottom}$, $U_{old, top}$) between the wire electrode (2, 2a) and a voltage tap (1, 1a, 7) at the electrode wheel head (4, 4a) or the electrode-wheel-head bearing arrangement (5, 5a).

3. Measuring apparatus according to Claim 2, characterized in that the sliding contacts (10, 10a) are embodied as fixed contacts.

4. Measuring apparatus according to Claim 2, characterized in that the sliding contacts (10, 10a) are embodied as spring-loaded contacts.

5. Measuring apparatus according to Claim 2, characterized in that a fixed sliding contact is provided for the one wire electrode and a spring-loaded sliding contact is provided for the other wire electrode.

**Revendications**

1. Procédé pour mesurer la tension électrique à travers le cordon de soudure dans une machine de soudage à molettes ou une machine de soudage par points pourvue de fils-électrodes (2, 2a), une prise de tension (10) étant prévue sur un des fils-électrodes (2), **caractérisé** en ce qu'afin de mesurer la tension électrique à travers le cordon de soudure, on effectue également une prise de tension (10a) sur le deuxième fil-électrode (2a), et en ce qu'on prélève en outre la tension électrique respective sur la tête de soudage à molette (4, 4a) ou son palier de montage (5, 5a) et on détermine la tension électrique entre la tête de soudage à molette (4, 4a) ou son palier de montage (5, 5a) et le fil-électrode associé (2, 2a).

2. Dispositif de mesure pour la mise en oeuvre du procédé selon la revendication 1, en vue de déterminer la tension électrique dans une machine de soudage à molettes ou une machine de soudage par points pourvue de fils-électrodes (2, 2a), une prise de tension (10) étant prévue sur un des fils-électrodes (2), **caractérisé** par une unité de mesure pour mesurer la tension électrique, avec un premier canal de mesure et deux contacts frotteurs (10, 10a) reliés à ce canal et destinés à la mise en contact du fil-électrode respectivement supérieur ou inférieur (2, 2a), et avec des canaux de mesure supplémentaires pour mesurer la tension électrique respective ($U_{vieillissement,inférieure}$, $U_{vieillissement,supérieure}$) entre le fil-électrode (2, 2a) et une prise de tension (1, 1a, 7) sur la tête de soudage à molette (4, 4a) ou son palier de montage (5, 5a).

3. Dispositif de mesure selon la revendication 2, **caractérisé** en ce que les contacts frotteurs (10, 10a) sont réalisés sous la forme de contacts fixes.

4. Dispositif de mesure selon la revendication 2, **caractérisé** en ce que les contacts frotteurs (10, 10a) sont réalisés sous la forme de contacts élastiques.

5. Dispositif de mesure selon la revendication 2, **caractérisé** en ce qu'un contact frotteur fixe est prévu pour un des fils-électrodes, et un contact frotteur élastique pour l'autre fil-électrode.

$U_{Mess1}$

$U_{Mess2}$

FIG. 1

$U_{Alter,oben}$

$U_{Schweissung}$

$U_{Alter,unten}$

FIG. 2